# EUROPEAN PATENT APPLICATION

(11) **EP 1 568 428 A1**
(43) Date of publication of application: **31.08.2005**
(21) Application number: 02743815.9
(22) Date of filing: 03.07.2002
(51) Int. Cl.: B23B 5/00

(54) **ADHESIVE SHEET AND STACKING MATERIAL**

(71) Applicant: NAGOYA OILCHEMICAL CO., LTD., Aichi 476-0001 (JP)
(72) Inventor: OGAWA, Masanori c/o Nagoya Oilchemical Co., Ltd., Tokai-shi, Aichi 476-0001 (JP); ITO, Kuninori c/o Nagoya Oilchemical Co., Ltd., Tokai-shi, Aichi 476-0001 (JP); KIOKA, Norihiko c/o Nagoya Oilchemical Co., Ltd., Tokai-shi, Aichi 476-0001 (JP)
(74) Representative: Vossius & Partner
(86) International application number: PCT/JP2002/006763
(87) International publication number: WO 2004/005017

(57) **Abstract**

A bondable sheet used as laminating material, and a laminated material using said bondable sheet are provided in the present invention. Said laminated/laminating material may be used for automobile interiors and the like.

Said bondable sheet comprises a porous sheet into which a synthetic resin is impregnated and a thermosetting resin powder put on the surface of said porous sheet, and said laminated sheet comprises said bondable sheet and at least another sheet member, such as a core member or surface member, laminated together.

## Description

### FIELD OF THE INVENTION

Hitherto, a bondable sheet manufactured by impregnating with a thermoplastic resin such as a phenolic resin or the like and curing to put said thermoplastic resin in B-stage, has been produced. Said bondable sheet may be put on another sheet member and hot-pressed to be a laminated material, and if necessary,the resulting laminated material may be molded into a desired shape at the same time. However, said bondable sheet has a fault in that said thermosetting resin in B stage impregnated into said porous sheet may harden beyond B-stage during storage for a long time and as a result, said bondable sheet may lose its bondability with another sheet member.

To solve said problem a bondable sheet comprising a porous sheet into which a thermosetting resin is impregnated and a hot melt adhesive powder on the surface of said porous sheet, said hot melt adhesive powder being such as ethylene-vinylacetate copolymer(EVA), polyamide (PA), or the like, is provided.

In said bondable sheet, even if said thermosetting resin impregnated into said porous sheet may harden beyond B-stage, losing its bondability, said bondable sheet can be bonded and laminated with another sheet member by heating said hot melt adhesive powder put on the surface of said porous sheet to melt, putting said bondable sheet on the other sheet member, and pressing and molding.

When said bondable sheet on the surface of which said hot melt adhesive powder is put on another sheet member and pressed and molded, since said pressing and molding are carried out at a temperature higher than the curing temperature for said thermosetting resin impregnated into said porous sheet, said hot melt adhesive powder is melted excessively, so that a satisfactory initial bonding strength can not be ensured, and as a result, it is feared that said bondable sheet may peel off away from the other sheet member.

To solve said problem, in the present invention, a bondable sheet (1) comprising a porous sheet (2) into which a synthetic resin (4) is impregnated, and a thermosetting resin powder (3) put on the surface of said porous sheet (2) is provided. Said synthetic resin (4) impregnated into said porous sheet (2) is preferably a thermosetting resin.

Further, said thermosetting resin powder (3) put on the surface of said porous sheet (2) is preferably a thermomeltable thermosetting resin, and still further, said thermomeltable thermosetting resin is preferably a phenolic resin

In addition, a laminated material (5) wherein said bondable sheet (1) is bonded to another sheet member through said thermosetting resin powder (3) put on the surface of said bondable sheet (1), is provided in the present invention.

### DISCLOSURE OF THE INVENTION

Even if said thermosetting resin impregnated into said bondable sheet (1) may harden beyond B-stage during storage, losing its bondability, said thermosetting resin powder (3) put on the surface of said bondable sheet (1) does not harden, maintaining its bondability. Accordingly, said bondable sheet (1) is put on another sheet member facing the surface of said bondable sheet on which said thermosetting resin powder is put, and said bondable sheet (1) and said sheet member are hot-pressed to bond together. In this case, said bondable sheet (1) and said sheet member are bonded by said thermosetting resin powder (3), and in a case where said thermosetting resin powder (3) is meltable, first said bondable sheet (1) and said sheet member are bonded by said melted thermosetting resin powder, and then said melted thermosetting resin hardens to bond finally said bondable sheet and said sheet member together.

### BREIF DESCRIPTION OF THE DRAWINGS

Fig.1 is a view for describing a manufacturing process of said bondable sheet
Fig.2 is a partial side sectional view of said laminated material
Fig.3 is a partial side sectional view of an embodiment of said bondable sheet
Fig.4 is a view for describing a press molding process of an embodiment of said laminated material
Fig.5 is a perspective view of an embodiment of said laminated material (silencer)

### [AN EXPLANATION OF CODES]

1 bondable sheet
2 porous sheet
3 thermosetting resin powder
4 synthetic resin
5 laminated material
6 core material

### PREFFERED EMBODIMENT

### [Bondable sheet]

In a bondable sheet (1) of the present invention a thermosetting resin powder (3) is put on a porous sheet (2) into which a synthetic resin (4) is impregnated. Said porous sheet (2), said synthetic resin (4), said thermosetting resin powder (3) and the like are precisely illustrated below.

### [Porous sheet]

Said porous sheet (2) used in the present invention may include a fiber sheet such as non-woven fabric, knitting, cloth, felt, or a laminated fiber sheet thereof, said fiber sheet being made of , for example, synthetic fiber such as polyester fiber, polyethylene fiber, polypropylene fiber, polyamide fiber, acryl fiber, urethane fiber, polyvinyl chloride fiber, polyvinylidene chloride fiber, viscose fiber, acetate fiber, urethane fiber or the like, natural fiber such as paper, pulp, cotton, wool, silk, coconut fiber, hemp fiber, bamboo fiber, kenaf fiber or the like, inorganic fiber such as glass fiber, carbon fiber, ceramics fiber, asbestos or the like, reused fiber gotten by unweaving scrapped textile made of above-mentioned fibers, textile fabric or non-woven fabric made of one or more kind(s) of above-mentioned fiber, a synthetic leather such as polyvinyl chloride synthetic leather, polyurethane synthetic leather, polyamide synthetic leather, or the like, a foamed plastic sheet such as foamed polyurethane sheet, foamed polyolefine sheet such as polyethylene, polypropylene or the like, foamed polyvinyl chloride sheet, foamed polystyrene sheet, foamed melamine resin sheet, foamed urea resin sheet, foamed phenolic resin sheet, a laminated sheet wherein foamed plastic sheet such as foamed polyurethane sheet, foamed polyethylene sheet, foamed polypropylene sheet, foamed polyurethane sheet or the like is laminated on the backside of said non woven fabric, knitting, cloth, synthetic leather or the like.

### [Synthetic resin]

A synthetic resin (4) is impregnated into said porous sheet (2) to give said porous sheet (2) moldability and to reinforce said porous sheet.

Said synthetic resin (4) used in the present invention may be thermosetting resin such as urethane resin, melamine resin, thermosetting acrylic resin, urea resin, phenolic resin (including resorcin resin and alkylresorcin resin), epoxy resin, thermosetting polyester resin, thermosetting polyamide resin, or the like; and thermoplastic resin such as polyethylene, polypropylene, ethylene-propylene copolymer, ethylene-propylene terpolymer, ethylene-vinylacetate copolymer, polyvinyl chloride, polyvinylidene chloride, polystyrene, polyvinylacetate, fluororesin, thermoplastic acrylic resin, thermoplastic polyester, thermoplastic polyamide, thermoplastic urethane resin, acrylonitrile-butadiene copolymer, styrene-butadiene copolymer, acrylonitrile-butadiene-styrene copolymer or the like. Each synthetic resin can be used singly or as a mixture therof.

In a case where a thermosetting resin is used, as said synthetic resin (4) of the present invention, a phenolic resin is preferably used, and especially a phenolic resin precondensate which is a pre-condensate of monohydric phenol and/or polyhydric phenol and aldehyde and/or aldehyde donor is preferaby used. The "monohydric phenol and/or polyhydric phenol" indicates that only monohydric phenol, or only polyhydric phenol is used, or that a mixture of monohydric phenol and polyhydric phenol is used. Further, precondensate produced by cocondensation of a precondensate of monohydric phenol and aldehyde and/or aldehyde donor, and a precondensate of polyhydric phenol and aldehyde and/or aldehyde donor may be used as a thermosetting resin of the present invention.

### [Monohydric phenol]

The monohydric phenols include alkyl phenols such as o-cresol, m-cresol, p-cresol, ethylphenol, isopropylphenol, xylenol, 3,5-xylenol, butylphenol, t-butylphenol, nonylphenol or the like; monohydric derivatives such as o-fluorophenol, m-fluorophenol, p- fluorophenol, o-chlorophenol, m-chlorophenol, p-chlorophenol, o-bromophenol, m-bromophenol, p-bromophenol, o-iodophenol, m-iodophenol, p-iodophenol, o-aminophenol, m-aminophenol, p-aminophenol, o-nitrophenol, m-nitrophenol, p-nitorophenol, 2,4-dinitorophenol, 2,4,6-trinitorophenol or the like; monohydric phenols of polycyclic aromatic compounds such as naphthol or the like. Each monohydric phenol can be used singly or used as a mixture thereof.

### [Polyhydric phenol]

The polyhydric phenols mentioned above, include resorsin, alkylresorsin, pyrogallol, catechol, alkyl catechol, hydroquinone, alkyl hydroquinone, fluoroglrsin, bisphenol, dihydroxynaphthalene or the like. Each polyhydric phenol can be used singly or used as a mixture thereof. Resorsin and alkylresorsin are more suitable than other polyhydric phenols. The alkylresorsin is the most suitable polyhydric phenol in particular because the alkylresorsin can react with aldehydes rapidly than the resorsin.

The alkylresorsins include 5-methyl resorsin, 5-ethyl resorsin, 5-propyl resorsin, 5-n-butyl resorsin, 4,5-dimethyl resorsin, 2,5-dimethyl resorsin, 4,5-diethyl resorsin, 2,5-diethyl resorsin, 4,5-dipropyl resorsin, 2,5-dipropyl resorsin, 4-methyl-5-ethyl resorsin, 2-methyl-5-ethyl resorsin, 2-methyl-5-propyl resorsin, 2,4,5-trimethyl resorsin, 2,4,5-triethyl resorsin, or the like.

Polyhydric phenol mixture produced by dry distillation of oil shale produced in Estonia is inexpensive, and said polyhydric phenol mixture includes 5-metylresorcin and many kinds of alkylresorcin having a high reactivity, so that said polyhydric phenol mixture is a specially desirable polyphenol raw material.

In the present invention, said phenolic compound and aldehyde and/or aldehyde donor (aldehydes) are condensated together. Said aldehyde donor means a compound or a mixture which emits aldehyde when said compound or said mixture decomposes. Said compound is such as formalin, formaldehyde, paraformaldehyde, trioxane, acetoaldehyde, propionaldehyde, polyoxyethylene, chloral, hexamethylenetetramine, furfural, glyoxal, n-butylaldehyde, caproaldehyde, allylaldehyde, benzaldehyde, crotonaldehyde, acrolein, tetraoxymethlene, phenyl acetoaldehyde, o-tolualdehyde, m-tolualdehyde, p-tolualdehyde, salicylaldehyde, methylolurea, methlated methylolurea, urea resin, methylolmelamine, methlated methylolmelamine, and single substance of, or two or more kinds of mixture of, alkylol triazon derivative.

In condensation of said monohydric phenol and/or polyhydric phenol and aldehyde and/or aldehyde donor, usually hydroxides of alkaline metals or alkaline earth metals such as sodium hydroxide, potassium hydroxide barium hydroxide, calcium hydroxide, or the like, oxides of alkaline earth metals such as lime or the like, salts of weak acids and alkaline metals such as sodium carbonate, sodium sulfite, sodium acetate, sodium phosphate or the like, ammonia, amines such as trimethylamine, triethylamine, hexamethylenetetramine, pyridine, or the like, or the like is used as a catalyst.

Said phenolic resin precondensate may be treated by an agent to improve water solubility. Said agent may include water soluble sulfites prepared by reaction of sulfurous acid, busulfurous acid, or metabisulfirous acid and alkine metals, trimethyl amine, quaternary ammonium (e.g.benzyltrimethylammonium); aldehyle additions prepared by reaction of water soluble sulfites and aldehydes.

The sulfialkylation agents for use to improve stability of aqueous solution of phenol resins, include alkaline metal sulfoxylates of aliphatic or aromatic aldehyde such as sodium formaldehyde sulfoxylate (a.k.a.Rongalit), sodium benzaldehyde sulfoxylate or the like; hydrosulfites (a.k.a.dithionites) of alkaline metal or alkaline earth metal such as sodium hydrosulfite, magnesium hydrosulfite or the like; hydroxyalkanesulfinate such as hydrixynethanesulfinate or the like.

Further, emulsion or powder of thermoplastic resin such as polyethylene, polypropylene, ethylene-propylene copolymer, ethylene-vinylacetate copolymer, vinylacetate polymer, acrylic ester polymer, styrene polymer, styrene-butadiene copolymer, acrylonitrile-butadiene copolymer, acrylonitrile-butadiene-styrene copolymers, polyamide having a low melting point, polyester having a low melting point or the like, or a mixture thereof, may be mixed in said phenolic resin precondensate.

Still further, if desired, said phenolic resin precondensate may be cocondensated with amino resin monomer such as urea, thiourea, melamine, thiomelamine, dicyandiamine, guanidine, acetoguanamine, benzoguanamine, 2,6-diamino-1.3-diamine or the like.

Usually said phenolic precondensate is provided as a aqueous solution or organic solvent and water mixture solution. Said organic solvent includes water soluble or hydrophilic organic solvent such as alcohol such as methanol, ethanol, n-propanol, isopropanol, n-butanol, isobutanol, s-butanol, t-butanol, n-amyl alcohol, isoamyl alcohol, n-hexanol, methyamyl alcohol, 2-ethylbutanol, n-heptanol, n-octanol, trimethylnonyl alcohol, cyclohexanol, benzyl alcohol, furfuryl alcohol, tetrahydro furfuryl alcohol, abietyl alcohol, diacetone alcohol or the like; ketone such as acetone, methyl acetone, methyl ethyl ketone, methyl-n-propyl ketone, methyl-n-butyl ketone, methyl isobutyl ketone, diethyl ketone, di-n-propyl ketone, diisobutyl ketone, acetonylacetone, methyloxide, cyclohexanone, methyl cyclohexanone, acetophenone, camphor or the like; glycol such as ethylene glycol, diethylene glycol, triethylene glycol, propylene glycol, trimethylene glycol, poly ethylene glycol or the like; glycol ether such as ethylene glycol monomethyl ether, ethylene glycol monoethyl ether, ethylene glycol isopropyl ether, diethylene glycol monomethyl ether, triethylene glycol monomethyl ether or the like; ester and derivatives thereof such as ethylene glycol diacetate, diethylene glycol monoethyl ether acetate or the like; ether such as 1,4-dioxane, or the like; diethyl cellosolve, diethyl carbitol, ethyl lactate, isopropyl lactate, diglycol diacetate, N,N-dimethylformamide or the like. Two or more kinds of said organic solvent can be mixed to use

Said synthetic resin (4) is usually applied or impregnated (in)to said porous sheet (2) in an amount in the range of between 2 and 1000g/m² as a solid. Said synthetic resin (4) applied or impregnated (in)to said porous sheet (2) is preferably put in B-stage by heat-drying.

Further, an additive may be contained in said bondable sheet (1) of the present invention. Said additive may be such as an antioxidant, antistalic agent, fire retardant, antiflame agent, insecticide, antiseptic, water repellent agent, oil repellent agent, urea, ethylene urea, propylene urea, 5-hydroxipropylene urea, 5-methoxy propylene urea, 5-methyl propylene urea, 4,5 dimethoxy ethylene urea, melamine or precondensate thereof or compound thereof, monohydric phenol or polyhydric phenol such as resorcin, alkyl resorcin or precondensate thereof (including both resol type phenolic resin and novolak type phenolic resin), dicyandiamide, parabanic acid, sodium sulfite, ammonium cobalt, 2,4-dinitrophenyl hydrazine (DNPH), tannin, catechin, flavonoid (flavon, flavonal, dihydroflavonol, isoflavon, flavonone, chalcone, anthocyanidin, or the like), phloroglucinol, acrtyl acetone, chitosan, active carbon, charcoal, coconut shell, wood powder, bark, protein, wax, age resister, ultraviolet absorber or the like.

### [Thermosetting resin powder]

Said thermosetting resin powder put on the surface of said bondable sheet (1) may include powder of a thermosetting resin such as phenolic resin (including novolak type phenolic resin, and resol type phenolic resin), epoxy resin, melamine resin, urea resin or the like.

In a case where a phenolic resin is used as said thermosetting resin powder (3), since said phenolic resin is meltable by heating (thermomeltable resin), said phenolic resin powder can be fixed on the surface of said bondable sheet by heat- melting.

In particular, in a case where a novolak type phenolic resin powder is used as said thermosetting resin powder (3) which is a phenolic resin, an amaldehyde donor such as hexamethylene tetramine or the like as a curing agent may be included in said powder. Other aldehyde donors illustrated in the explanation of said synthetic resin (4) can be used as curing agents.

In a case where a curing agent such as formaldehyde or the like is sufficiently generated from a synthetic resin contained in said bondable sheet (1) and other members when said laminated material is produced, a novolak type phenolic resin without a curing agent may be used.

Said thermosetting resin powder (3) used in the present invention has a size commonly below 250µm, desirably below 500µm.

Said thermosetting resin powder (3) is sprinkled on the surface of said porous sheet (2) and fixed. As a method of fixing said thermosetting resin powder on said porous material, for instance, a method wherein said thermosetting resin powder is sprinkled on the surface of a porous sheet (2) into which uncured synthetic resin (4) is impregnated and said thermosetting resin powder is then fixed as said synthetic resin (4) hardens in said porous sheet, and a method wherein said thermosetting resin powder (3) sprinkled on the surface of said porous sheet (2) is heated and melted to fix on the surface of said porous material, in a case where said thermosetting resin powder is thermomeltable, are provided. Further, said thermosetting resin powder (3) of the present invention may be put on one or either side of said bondable sheet.

### [Manufacture of said bondable sheet]

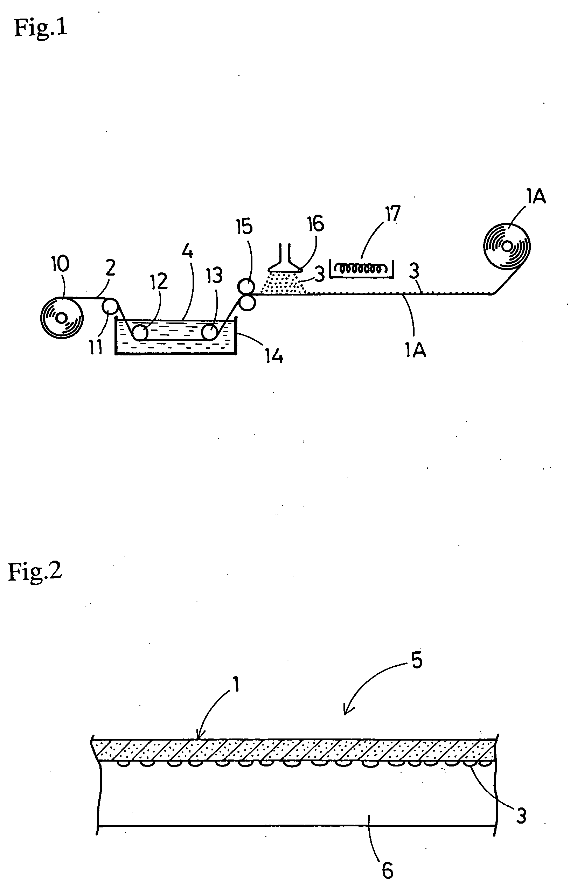

Fig.1 shows an embodiment of the manufacture of a bondable sheet (1) of the present invention. As shown in Fig.1, a porous sheet (2) is pulled out from a roll (10) and said porous sheet (2) is guided by guiding rolls (11,12,13) in a syntheric resin impregnating tank (14) in which a synthetic resin (4) solution is filled. Said porous sheet (2) is impregnated with said synthetic resin (4) in said tank (14) followed by squeezing by a squeezing roll (15) to adjust impregnating amount of said synthetic resin (4) solution. After said adjusting a thermosetting resin powder (3) is sprinkled from a sprinkling vessel (16) on said porous sheet into which said synthetic resin (4) solution is impregnated.

Said porous sheet (2) on which said thermosetting resin powder is put by sprinkling is then heated and dried at a temperature below curing temperature of said thermosetting resin powder (3) in a heating apparatus (17) to obtain an original sheet (1A) of said bondable sheet (1), and said bondable sheet (1) can be obtained by cutting said original sheet (1A). Still more, the method of manufacturing said bondable sheet (1) is not limited to the above mentioned one.

### [Laminated material]

Said laminated material (5) is manufactured by bonding said bondable sheet to another sheet member such as surface member, core member, or the like together, through said thermosetting resin powder (3).

Said laminated material (5) of the present invention is widely used, for instance, for head lining, door trim, underfloor covering, and trunk room interiors for automobiles, building material, or the like, and said laminated material (5) is properly designed according to its intended application, and has at least one bondable sheet (1) as a basic indispensable element.

Said other sheet members to which said bondable sheet (1) is bonded may be a fiber sheet such as non-woven fabric, knitting, cloth, felt or a laminated sheet thereof, said fiber sheet being made of one or more kind(s) of fiber(s) such as synthetic fiber such as polyester fiber, polyethylene fiber, polypropylene fiber, polyamide fiber, acryl fiber, urethane fiber, polyvinyl chloride fiber, polyvinylidene chloride fiber, viscose fiber, acetate fiber, urethane fiber or the like, natural fiber such as paper, cardboard, pulp, cotton, wool, silk, coconut fiber, hemp fiber, bamboo fiber, kenaf fiber or the like, inorganic fiber such as glass fiber, carbon fiber, ceramics fiber, asbestos or the like, reused fiber gotten by unweaving scrapped textile made of above-mentioned fibers, textile fabric or non-woven fabric made of one or more kind(s) of above-mentioned fiber, or an interconnecting plastic foam such as interconnecting polyurethane (including foamed soft polyurethane and hard polyurethane), foamed polyolefine such as polyethylene, polypropylene or the like, foamed polyvinyl chloride, foamed polystyrene, foamed material of amino resin such as melamine resin, urea resin, or the like, foamed epoxy resin, foamed phenolic resin or the like, and sintered sheet such as sintered plastic beads sheet; and said bondable sheet (1) can be bonded to said sheet member. Other sheet members used in the present invention are such as surface member, thick core member, or the like.

Further, said synthetic resin (4) may be impregnated into said sheet member and said additive may be contained in said sheet member.

Fig.2 shows a laminated material (5) wherein a core member (6), which is a porous sheet into which a synthetic resin (4) is impregnated, and a bondable sheet (1), are laminated together. Said core member (6) used in said laminated material (5) is a porous sheet such as non-woven fabric, knitting cloth, synthetic leather, foamed plastic, or the like, into which a synthetic resin used in said bondable sheet is impregnated.

Said bondable sheet (1) used in said laminated material (5) has an excellent bondability with other sheet members and rigidity. Further, since said bondable sheet (1) used in said laminated material (5) has an excellent bondability and proper rigidity, said bondable sheet (1) has an excellent workability.

The present invention is illustrated more precisely by following EXAMPLES but following EXAMPLES are not intended to limit the scope of the present invention.

### EXAMPLE 1

A bondable sheet (1) of the present invention was manufactured by a method of manufacturing bondable sheet shown in Fig. 1. Said method for manufacturing bondable sheet is precisely illustrated below. A porous sheet (2) (polyester fiber non-woven fabric, unit weight 50g/m²) was pulled out from a roll (10) and said porous sheet (2) was guided by guiding rolls (11, 12, 13) in a synthetic resin impregnating tank (14) in which a synthetic resin (4) solution was filled. Said synthetic resin (4) solution filled in said synthetic resin impregnating tank (14) is a 50% by weight aqueous solution of a phenol-alkyl resorcin folmaldehyde precondensate.

Said porous sheet (2) was impregnated with said synthetic resin in said tank (14) followed by squeezing by a squeezing roll (15) to adjust impregnating amount of said synthetic resin (4) solution. Impregnation amount of said synthetic resin (4) was adjusted to be 20g/m² as solid for said porous sheet (2).

Then a novolak type phenolic resin powder (3) was sprinkled from a sprinkling vessel (16) on one side of said porous sheet (2) (sprinkling amount 7g/m²), and said porous sheet (2) on which said powder was put by sprinkling was then heated and dried at 80°C for 2 minutes in a heating apparatus (17) to obtain an original sheet (1A) of said bondable sheet (1).

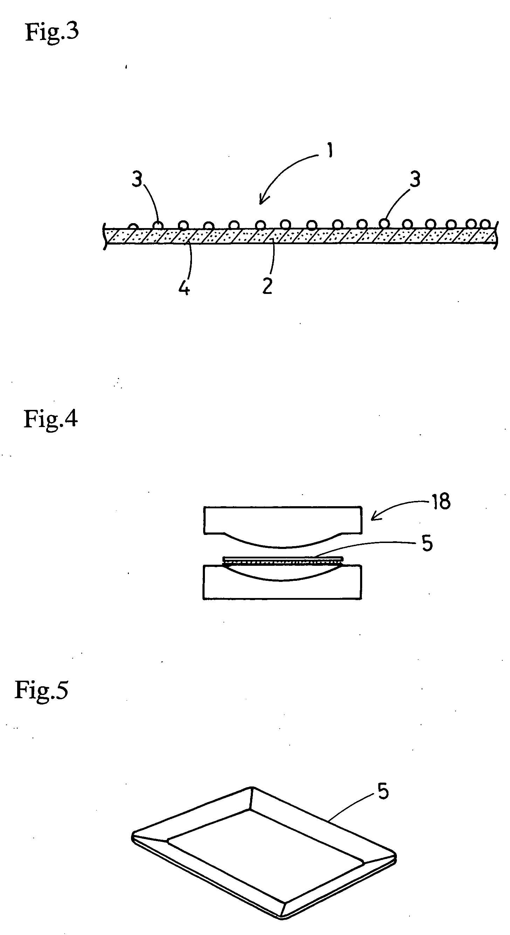

Said bondable sheet (1) shown in Fig.3 was obtained by cutting said original sheet (1A) into a suitable size with a cutter.

The resulting bondable sheet (1) was put on a core sheet member (glass wool in which 10 % by weight of a resol type phenolic resin was contained, unit weight 500g/m²) and hot-pressed at 200°C for 30 seconds by a press molding machine (18) as shown in Fig.4 to obtain a laminated material (5) as shown in Fig.5. Said laminated material (5) is used as a silencer for automobile engine hoods or the like.

### EXAMPLE 2

Said original sheet (1A) of said bondable sheet(1) obtained in EXAMPLE 1 had been stored at room temperature (25°C) for one month and after the storage, a laminated material was manufactured using said bondable sheet (1) cut from said original sheet by the same method as described in EXAMPLE 1.

As mentioned above, in a case where said bondable sheet (1) after one month storage was used, the resulting laminated material (5) had an excellent peel strength.

Further, using a bondable sheet (1) cut from said original sheet (1A) having been stored at room temperature (25°C) for 6 months, a laminated material (5) having an excellent peel strength was also obtained.

Accordingly, said bondable sheet (1) has an excellent bondability and the resulting laminated material (5) has an excellent peel strength.

### COMPARISON 1

As a comparison to EXAMPLE 1, a bondable sheet without said thermosetting resin powder (3) was manufactured. Said bondable sheet of this comparison was manufactured by the same method as in said bondable sheet (1) of EXAMPLE 1 with the exception that said thermosetting resin powder(3) (Novolak type phenoic resin powder) was not sprinkled on said porous sheet.

After the resultant bondable sheets had been stored at room temperature (25°C) for one week and one month respectively, then used respectively, attempts were made to manufacture laminated materials by the same method as described in EXAMPLE 1.

However, said bondable sheet stored for one week began to lose its bondability and laminated material having adequate peel strength can not be obtained, and further, about said bondable sheet stored for one month, its bondability had been lost completely so that a laminated material can not be manufactured.

In the case of said bondable sheet on which no thermosetting resin powder is sprinkled, said bondable sheet has bondability for a few days after manufacture, but when said bondable sheet is stored at room temperature for more than one week, said bondable sheet begins to lose its bondabitity. On the other hand, said bondable sheet (1) of EXAMPLE 2 retains an adequate bondability even if said bondable sheet is stored at room temperature for at least 6 months.

Thus said bondable sheet has ideal stability for storage.

### POSSIBILITY OF INDUSTRIAL USE

Said bondable sheet of the present invention has an excellent bondability with another sheet member.

## Claims

1. A bondable sheet comprising a porous sheet into which a synthetic resin is impregnated and a thermosetting resin powder on the surface of said porous sheet.

2. In accordance with Claim 1, wherein said synthetic resin impregnated into said porous sheet is a thermosetting resin.

3. In accordance with Claim 1, wherein said thermosetting resin powder on the surface of said porous sheet is thermomeltable thermosetting resin.

4. In accordance with Claim 3, wherein said meltable thermosetting resin is a phenolic resin.

5. A laminated material wherein said bondable sheet of Claims 1 to 4 is bonded to another sheet member through said thermosetting resin powder on the surface of said bondable sheet.
